# EUROPEAN PATENT SPECIFICATION

(11) **EP 1 708 007 B1**
(45) Date of publication and mention of the grant of the patent: **12.03.2008**
(21) Application number: 06111742.0
(22) Date of filing: 27.03.2006
(51) Int. Cl.: G02B 27/01, G02B 26/10, H04N 5/74

(54) **Display device**
Anzeigevorrichtung
Dispositif d'affichage

(30) Priority: 28.03.2005 JP 2005090296
(43) Date of publication of application: 04.10.2006
(73) Proprietor: Calsonic Kansei Corporation, Tokyo 164-8602 (JP)
(72) Inventor: Arai, Kazuo CALSONIC KANSEI CORPORATION, Tokyo 164-8602 (JP); Kubo, Takashi CALSONIC KANSEI CORPORATION, Tokyo 164-8602 (JP)
(74) Representative: Intes, Didier Gérard André

(56) References cited:
- WO-A-95/34014
- US-A1- 2003 030 913
- US-B1- 6 361 172
- PATENT ABSTRACTS OF JAPAN vol. 1996, no. 08, 30 August 1996 (1996-08-30) -& JP 08 098064 A (MITSUBISHI ELECTRIC CORP), 12 April 1996 (1996-04-12)

## Description

The present invention relates to a display device which is available on motor vehicles, boats and ships, aircrafts, and others and can provide a virtual display image based on image information, such as drive information.

A display device of this kind is disclosed in Japanese patent laid-open No. (Tokkaihei) 7-20794 and WO-A2-95/34014. These conventional display devices include plural light emitting elements disposed in line, a polygonal column-like mirror with plural reflective surfaces, a drive unit for rotating the mirror, and a controller for controlling light-on timing of the light emitting elements according to a rotational position of the mirror. In addition, the display device of the former further requires a lens for diverging light outputted from the light emitting elementsand a screen for displaying two-dimensional virtual display image, and the display device of the latter further requires a collimating lens for collimating the light outputted through the mirror and a glass surface for reflecting the light.
In the conventional display device, light outputted from the light emitting elements passes through the lens or is reflected on the mirror to produce the virtual display image on the screen or glass surface.

The screen generally is made of transparent material and provided at its front and back sides with a satin finished surface, or made of an opalescent plate. The screen causes incident rays to diffuse in every possible direction, such as a transmitted side direction and/or a reflected side direction. Therefore, some of the rays do reach an eye position of a driver because of light reflection and diffusion, causing light-energy loss to decrease brightness of the image.

In order to obtain a sufficiently bright display image on the screen, a large scaled and powerful light-emitting resource is required, which causes the display device to grow in size and increase running cost due to high electric power consumption. In addition, it also increases generation of heat, decreasing its life.

On the other hand, in the conventional display device, many light sources for emitting different colors are needed in order to produce a multicolor virtual display device. This increases manufacturing cost. In addition, a multangular-prism mirror of the conventional display device also increases the manufacturing cost.

Other display system which uses a hollow drum and lenses is disclosed in US 2003/0030913. This conventional display system acts as a color projecting system, and includes an integrating lenslet array, a polarization conversion system, spherical lenses, cylindrical lenses, a hollow drum containing a cylindrical lens, aspheric lenses, a polarization beam splitter, a wide band quarter wave plate and light modulator panel, which increases its manufacturing costs and causes light-energy loss.

Further other conventional display systems which use a rotating prism are disclosed in JP 8098064 and US 2003/0030913. The display system of the former is adapted for a viewfinder of a VTR camera to shown small display image, and includes LED array of Red, Green and Blue, first lens for horizontally compressing light outputted from the LED array, a rotating transparent prism, and a second lens for enlarging the light through the prism, which requires many LEDs in order to display colored image larger than shown in a viewfinder of a VTR camera, which increases its manufacturing costs. The display system of the latter is a projector which needs a screen, and includes many parts, such as a homogenizing and color separation optical device, an anamorphic optical system, a rotating transparent prism, first and second relay lenses, a total internal reflection prism and a display device, which increases its manufacturing costs and causes light-energy loss.

It is, therefore, an object of the present invention to provide a display device which overcomes the foregoing drawbacks and can decrease light energy loss so as to obtain a sufficiently display brightness by a smaller and lower-cost light source and produce multicolor virtual display at lower manufacturing cost.

According to a first aspect of the present invention there is provided a display device for producing a virtual display image based on contents of display information. The display device comprises a plurality of light emitting elements which are arranged in line and capable of emitting light, and an optical system made of transparent material so that the optical system allows the light outputted from the light emitting elements to enter and exit the optical system. The display device also comprises a rotating unit for rotating the optical system and a control unit for controlling lighting-on and light-off of the light emitting elements in synchronization with rotation movement of the optical system and according to the contents of the image information to be displayed. A color filter is putted on a surface of the optical system and selectively passes the light in a predetermined wavelength band through the color filter.

The objects, features and advantages of the present invention will become apparent as the description proceeds when taken in conjunction with the accompanying drawings, in which:
FIG. 1 is a schematic side view showing an optical system used in a display device of a first embodiment according to the present invention;
FIG. 2 is a schematic plan view showing the optical system and an electronic system, which are used in the display device of the first embodiment shown in FIG. 1;
FIG. 3 is an enlarged perspective view of a light emitting diode (LED) array and a slit plate having a slit for passing light from the LED array therethrough, both being used in the display device of the first embodiment shown in FIGS. 1 and 2;
FIG. 4 is a schematic diagram illustrating an example of how a virtual display image is produced by the display device of the first embodiment when the optical system is tilted at 40° in a counterclockwise direction relative to an optical axis;
FIG. 5 is a schematic diagram showing virtual display images when the optical system is tilted at angles - 40°, - 20°, 0°, + 20° and + 40° relative to the optical axis in the first embodiment;
FIG. 6 is a diagram showing a relationship between wavelengths and transmittance characteristics of light when it passes through yellow and/or blue filters;
FIG 7A is a schematic diagram showing an example of a two-dimensional virtual display image obtained by using five light emitting elements of the LED array of the display device in the first embodiment, and FIG. 7B is a schematic diagram showing an example of two-dimensional virtual display image, representing letters "ABC", obtained by using twenty-four light emitting elements of the LED array of the display device in the first embodiment;
FIG. 8 is a time chart of rotation control of the optical system and light-on control of the light emitting elements of the display device of the first embodiment;
FIG. 9 is a schematic side view showing an optical system used in a display device of a second embodiment according to the present invention;
FIG. 10A is a schematic diagram showing an example of a two-dimensional virtual display image obtained by using five light emitting elements of the display device of the second embodiment;
FIG. 10B is a schematic diagram showing an example of two-dimensional virtual display image, representing letters "ABC", obtained by using twenty-four light emitting elements of the display device of the second embodiment;
FIG. 11 is a schematic side view showing an optical system used in a display device of a third embodiment according to the present invention;
FIG. 12 is a schematic plan view showing the optical system and an electronic system, which are used in the display device of the third embodiment shown in FIG. 11;
FIG. 13 is a perspective view showing the optical system of the display device of the third embodiment;
FIG. 14 is a schematic diagram showing an example of a two-dimensional virtual display image obtained by using five light emitting elements of the display device of the third embodiment;
FIG. 15 is a schematic side view showing an optical system used in a display device of a fourth embodiment according to the present invention;
FIG. 16 is a schematic plan view showing the optical system and an electronic system, which are used in the display device of the fourth embodiment shown in FIG. 15;
FIG. 17 is a schematic diagram showing an example of a two-dimensional virtual display image obtained by using five light emitting elements of the display device of the fourth embodiment;
FIG. 18 is a time chart of rotation control of the optical system and light-on control of the light emitting elements of the display device of the fourth embodiment;
FIG. 19 is a schematic diagram showing an optical system of a display device of a fifth embodiment according to the present invention;
FIG. 20 is a schematic plan view showing the optical system and an electronic system, which are used in the display device of the fifth embodiment shown in FIG. 19;
FIG. 21 is an enlarged perspective view showing light emitting elements and a slit plate having a slit for passing light from the light emitting elements therethrough, both being used in the display device of the fifth embodiment shown in FIGS. 19 and 20;
FIG. 22 is a schematic diagram showing an example of a two-dimensional virtual display image obtained by using five light emitting elements of the display device of the fifth embodiment; and
FIG. 23 is a time chart of rotation control of the optical system and light-on control of the light emitting elements of the display device of the fifth embodiment.

Throughout the following detailed description, similar reference characters and numbers refer to similar elements in all figures of the drawings, and their descriptions are omitted for eliminating duplication.

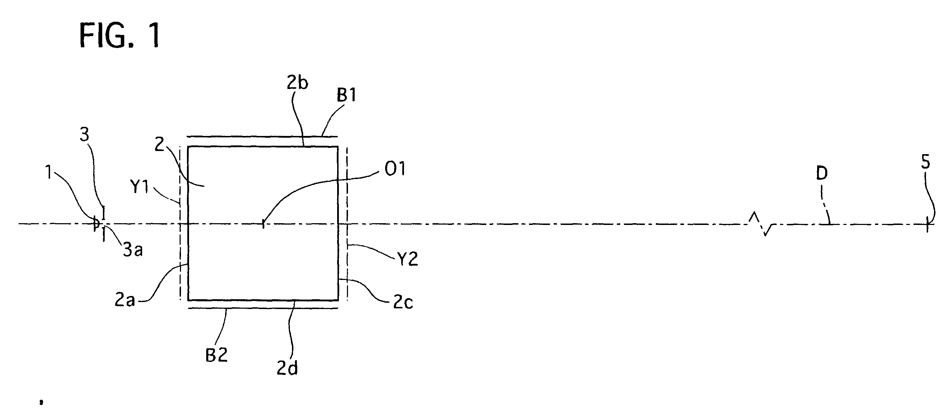

Referring to FIGS. 1 to 8 of the drawings, there is shown a first preferred embodiment of a display device according to the present invention.

A display device of the first embodiment is used in motor vehicles to produce a virtual display image for providing, for example, a driver with information he or she wants. In this case, the display device is installed in an instrument panel of the motor vehicle, for example.

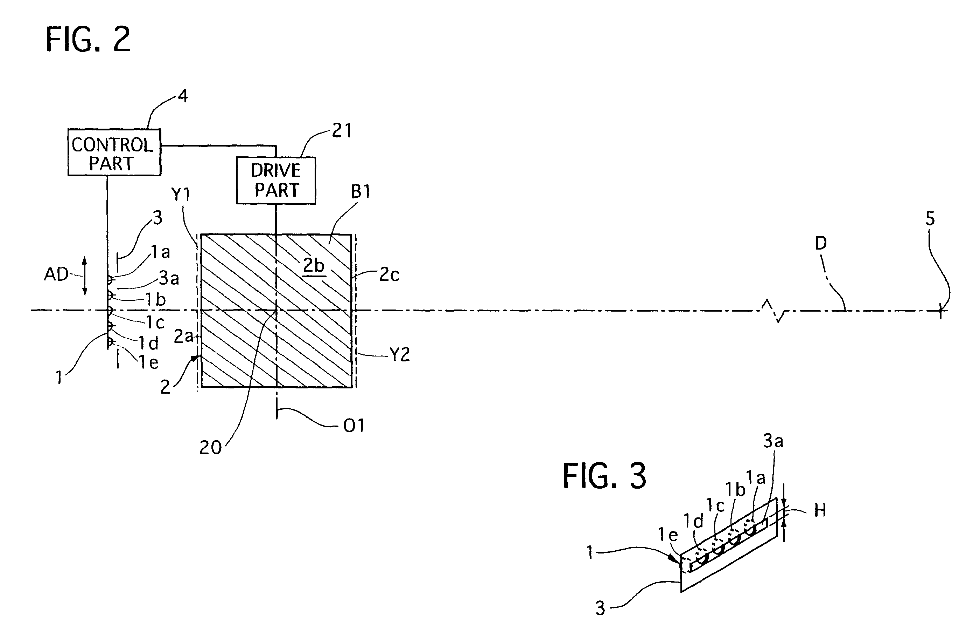

The display device includes a prism 2, a light emitting diode (LED) array 1, a slit plate 3, a control part 4 and a drive part 21 as shown in FIGS. 1 and 2. The LED array 1 and the drive part 21 are electrically connected to the control part 4, all of them constitute an electric system of the display device. The prism 2 acts as an optical system of the present invention.

The LED array 1 has five light emitting elements composed of a first LED 1a, a second LED 1b, a third LED 1c, a fourth LED 1d and a fifth LED 1e in this embodiment. The first to fifth LEDs 1a to 1e are arranged in line with one another in a horizontal direction, indicated by an arrow AD in FIG. 2, and equally spaced from the adjacent one. These five LEDs 1a to 1e are also arranged in parallel with a rotation axis O1 of the prism 2, where the third LED 1c is on an optical axis D which is perpendicular to the rotation axis O1 and passes a center 20 of the prism 2 and an eye position 5 of the driver.

The LEDs 1a to 1e are constructed to emit white light toward the eye position 5 through the prism 2 in the first embodiment, and light-on and light-off timing of them are controlled by the control part 4.

The slit plate 3 is disposed between the LED array 1 and the prism 2 to block off the light emitted from the LED array 1 except through a slit 3a formed thereon.

The slit 3a is formed to be parallel with an LED arrangement direction indicated by the arrow AD and also to the rotation axis O1 of the prism 2 so that the optical axis D can pass through the slit 3a. The slit 3a is set to have an opening height H and an opening width so that diffusion angles of the light outputted from the first to fifth LEDs 1a to 1e through the slit 3a are restricted and all of the light passing through the slit 3a can travel to the prism 2.

The prism 2 is shaped in a quadrangular prism, which is made of transparent acrylic by injection molding. The prism 2 has four surfaces for receiving the light from the LEDs 1a to 1e through the slit 3a and outputting the light therefrom toward the eye position 5. They are a first surface 2a, a second surface 2b perpendicular to the first surface 2a, a third surface 2c perpendicular to the second surface 2b and parallel with the first surface 2a, and a fourth surface 2d perpendicular to the first and third surfaces 2a and 2c and parallel with the second surface 2b.

Two opposite surfaces of the prism 2 act as a set of paired surfaces of the present invention. Therefore, the prism 2 of the first embodiment has two sets of the paired surfaces consisting of a set of the first surface 2a and the third surface 2c, and a set of the second surface 2b and the fourth surface 2d. One of them acting as first paired surfaces in first color of the present invention and the other of them acting as second paired surfaces in second color of the present invention, respectively. The paired surfaces are designed to have a distance of 20 mm between the paired surfaces in this embodiment.

The prism 2 is rotatable at the center of the rotation axis O1 to change its surfaces so that one of the first to fourth surfaces 2a to 2d can be subjected to incident light passing through the slit 3a.

A first yellow filter Y1 and a second yellow filter Y2 are putted on the first and third surfaces 2a and 2c, respectively. A first blue filter B1 and a second blue filter B2 are putted on the second and fourth surfaces 2b and 2d, respectively. The filters Y1, Y2, B1 and B2 act as a color filter of the present invention, and are made of colored translucent material, such as translucent color film, translucent color printing, or the like. The filters Y1, Y2, B1 and B2 adhere to the surfaces 2a, 2c, 2b and 2d of the prism 2, respectively, but they are illustrated to be apart from each other for facilitating visualization of their presence in the drawings.

The control part 4 is electrically connected to the LED array 1 and the drive part 21. It comprises a not-shown microcomputer for controlling timing of light-on and light-off of the first to fifth LEDs 1a to 1e and a not-shown display electric circuit for supplying electric pulse current to them according to a first control signal outputted from the microcomputer. The first control signal is determined based on a rotational angle of the prism 2 and display information. The control part 4 acts as a control unit of the present invention.

The drive part 21 is electrically connected to the control part 4 and mechanically connected with the rotation axis O1. It includes a not-shown electric motor and a not-shown electric power supply circuit for supplying electric power to the motor according to a second control signal outputted from the control part 4. The second control signal is determined based on the number of the surfaces 2a to 2d of the prism 2 and time for obtaining afterimage effect. The drive part 21 acts as a drive unit of the present invention.

The display device of the first embodiment can produce a two-dimensional virtual display image without a screen, although it is needed in the conventional display device.

The operation of the display device of the first embodiment will be described.

As shown in FIGS. 1 and 2, the first to fifth 1a to 1e of the LED array 1 output the white light toward the prism 2 through the slit plate 3. The prism 2 is positioned at a rotation angle 0° relative to the optical axis in D FIG. 1. At this rotation angle, the first surface 2a of the prism 2 is in a state perpendicular to the optical axis D to face the slit 3a of the slit plate 3 and receive the incident light. Therefore, the ray travels outputted from the third surface 2c, which is also perpendicular to the optical axis D, straight through the prism 2 along the optical axis D to the eye position 5.

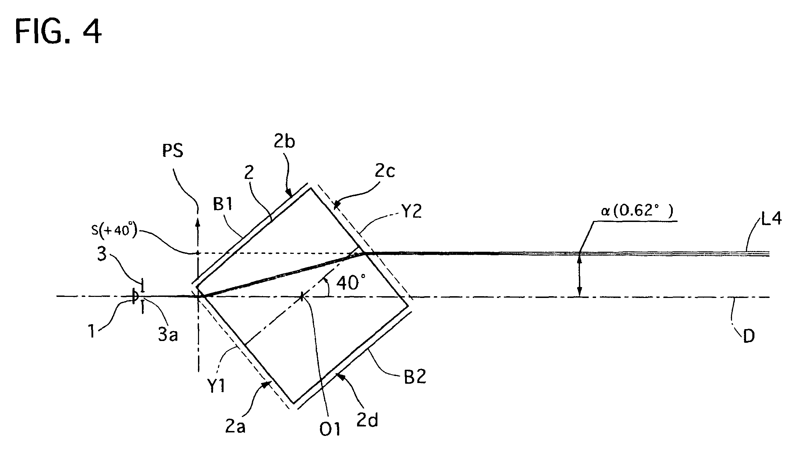

The ray outputted from the prism 2 becomes deflected according to the rotation angle of the prism 2, when the rotation angle of the prism 2 is not equal to 0°, ±90°×n where n is a natural number. FIG. 4 shows an example when the rotation angle is 40° relative to the optical axis D in a counterclockwise direction in FIG. 4.

In this case, the ray inputted to the first surface 2a is reflected and deflected by the prism 2, a deflection ray L4 outputting from the third surface 2c at a deflection angle α of 0.62° relative to the optical axis D in the counterclockwise direction. Therefore, the driver can see its virtual display image S(+40°), which is produced on an LED array side of an extended line of the deflection ray L4 and on an image plane PS.

Thus, the ray outputted from the prism 2 is deflected by the prism 2 according to the rotation angle of the prism 2.

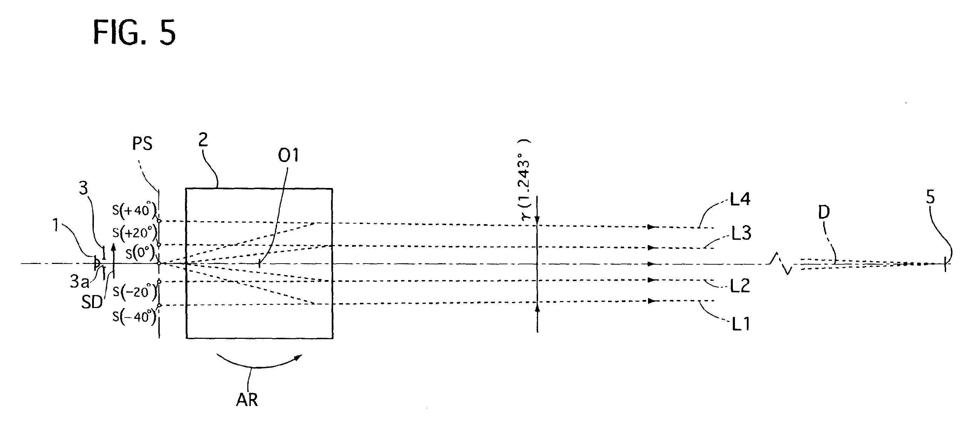

FIG. 5 shows a relationship between the virtual display images and the rotation angles of the prism 2 when the prism 2 is rotated in a rotating direction AR to have the rotation angles -40°, -20°, 0°, +20° and +40°. Incidentally, "+" indicates the counterclockwise direction from the optical axis D, and "-" indicates a clockwise direction from the optical axis D.

According to these rotation angles, five virtual display images S(-40°), S(-20°), S(0°), S(+20°) and S(+40°) can be obtained on the image plane PS due to their deflection rays L1 to L4 deflected by the prism 2. A deflection angle difference between the ±40° deflection rays L1 and L4 becomes an angle γ of 1.243°.

This means that deflection angles of the rays outputted from the prism 2 can be varied according to the rotation angle of the prism 2 to produce the virtual display images S(-40°), S(-20°), S(0°), S(+20°) and S(+40°) on the image plane PS from downward toward upward as the prism 2 moves from -40° to +40° in the counterclockwise rotating direction AR.

Therefore, the rays outputted from the prism 2 are deflected at different deflection angles according to the rotation angle of the prism 2 and travel to the eye position 5. The driver can see these two-dimensional virtual display images produced by the deflection rays on the image plane PS. Not that light-on of the LEDs 1a to 1e is required in order to produce the virtual display images in addition to rotation control of the prism 2 described above.

The LEDs 1a to 1e are controlled to emit white light for a predetermined short time by the control part 4 when the rotation angle becomes a predetermined angle, for example -40°, -20°, 0°, +20° and +40°. The light-on time and the rotation speed of the prism 2 are determined based on the afterimage effect and display information.

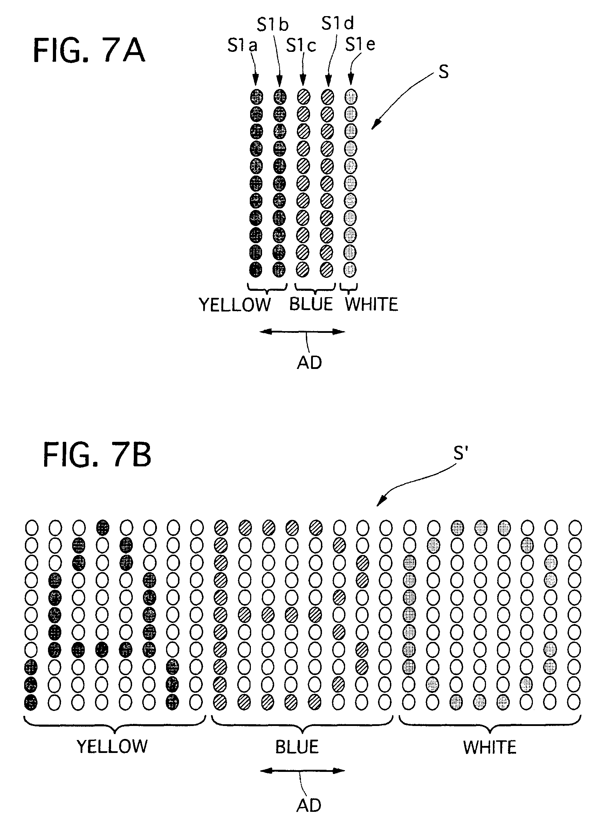

Fig. 7A shows the two-dimensional virtual display image S in three colors by the rotation control of the prism 2 and the light-on control of the LEDs 1a to 1e. The display image S consists of five-column and eleven-line dot images as shown in FIG. 7A, including two-yellow-column dot images S1a and S1b, two-blue-column dot images S1c and S1d and one-white-column dot images S1e. The positions of the five column dot images S1a to S1e are produced corresponding to five LEDs 1a to 1e and these positions. The eleven lines are produced by driving the LED array 1 to emit the white light eleven times. The colors of the dots of the display image S are produced from the white light of the LEDs 1a to 1e by passing through the yellow and blue filters Y1, Y2, B1 and B2.

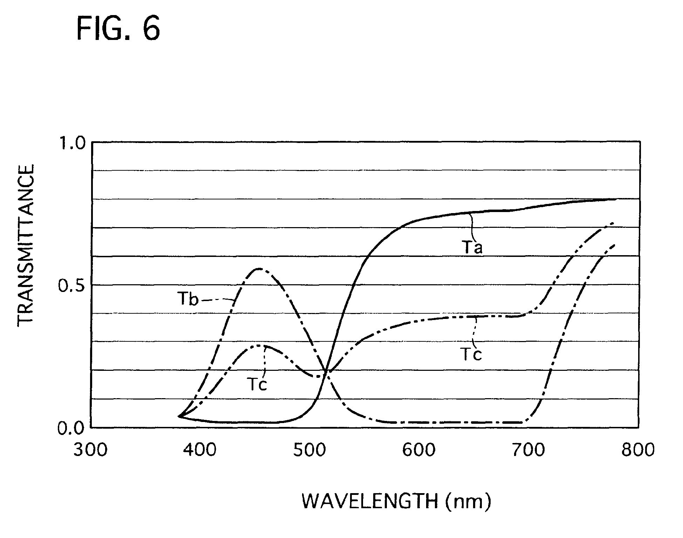

How to obtain yellow, blue and white rays from the white light will be described with reference to FIG. 6.

FIG. 6 shows a relationship between wavelengths and transmittance characteristics of light when it passes through the yellow and/or blue filters Y1, Y2, B1, and/or B2. The transmittance characteristic when the white light passes through the yellow filters Y1 and Y2 is indicated by a line Ta, the transmittance characteristic when the white light passes through the blue filters B1 and B2 is indicated by a line Tb, and the transmittance characteristic when the white light passes the yellow filter Y1 or Y2 and the blue filter B 1 or B2 is indicated by a line Tc.

Therefore, the yellow ray outputted from the prism 2 is produced from the white light emitted from the LED array 1 by passing the white light through the yellow filters Y1 and Y2 on the first and third surfaces 2a and 2c of the prism 2. Similarly, the blue ray outputted from the prism 2 is produced from the white light by passing it through the blue filters B1 and B2 on the second and fourth surfaces 2b and 2e of the prism 2.

The white ray, outputted from the prism 2 with the color filters Y1, Y2, B1, and B2, can be obtained by passing the white light outputted from the LED array 1 through the yellow filter Y1 or Y2 and the blue filter B1 or B2, because yellow light and blue light are complementary colors. But, in the first embodiment, the white ray is obtained not by passing the white light through one of the yellow and blue filters and then through the other of them. It is obtained by individually producing the yellow ray and the blue ray by respectively using the yellow filters Y1 and Y2 and the blue filters B1 and B2 at the same positions so as to be mixed up into the white ray due to the afterimage effect. Note that the LEDs 1a to 1e are controlled to stop emitting the white light so that it does not pass through the yellow filter Y1 or Y2 and the blue filter B1 or B2 at the same time

As described above, the color of the deflection ray can be changed according to the rotation angle of the prism 2 and the light-on timing of the LED array 1.

The control part 4 controls the LED array 1 to emit the white light predetermined times when the prism 2 are rotated at high speed and reaches predetermined rotation angles of the prism 2. The high speed rotation control of the prism 2 and light on/off control of the five LEDs 1a to 1e can produce the two-dimensional virtual display image due to afterimage effect.

In this embodiment, the five LEDs 1a to 1e are used and their light-on control is performed eleven times according to the rotation angles of the prism 2. This provides the virtual display image S represented by five-column and eleven-line dot images. Each dot image produced by the LED 1a to 1e becomes vertically long, since the prism 2 rotates at constant angular speed and light-on time of the LEDs 1a to 1e has limited length. The vertical length of the dot image can be adjusted by changing the opening height H of the slit 3a of the slit plate 3 shown in FIG. 3 and/or by controlling a length of the light-on time of the LEDs. The horizontal length of the dot image is determined by a distance between the first and fifth LEDs 1a and 1e.

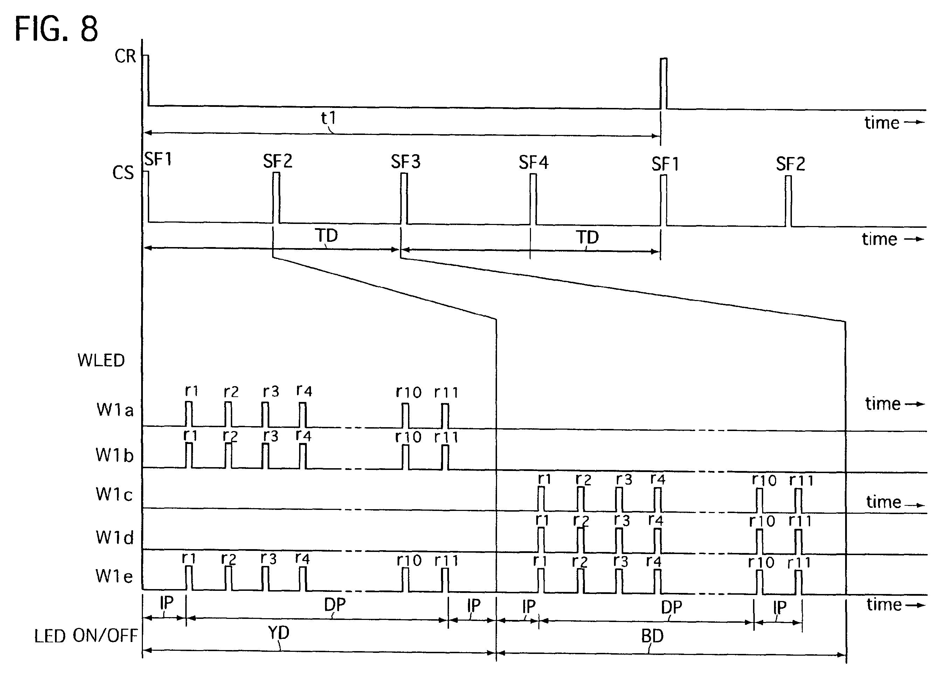

The rotation control of the prism 2 and light-on control of the LED will be described with reference to a time chart shown in FIG. 8.

The most upper part of a time chart in FIG. 8 indicates a rotation clock signal CR, which appears at every one rotation of the prism 2. Accordingly, an interval between adjacent rotation clock signals is equal to a time for one rotation of the prism 2.

The second part of the time chart indicates a surface clock signal CS, which appears when every one surface 2a, 2b, 2c, 2d passes through a predetermined position. In this first embodiment, four surface clock signals SF1 to SF4 appear in one rotation cycle time t1 between the adjacent rotation clock signals, because the prism 2 has the four surfaces 2a to 2d. An interval of adjacent surface clock signals is a time for producing one display image, corresponding to a display period TD indicated at a bottom part in the time chart. In this time chart, WLED indicates a waveform of the LEDs and consists of waveforms W1a to W1e of electric power pulses to be supplied to the first to fifth LEDs 1a to 1e, respectively.

In one surface time of an interval between the adjacent surface clock signals, some of the five LEDs 1a to 1e are supplied with eleven electric power pulses r1 to r11 according to contents of the display information a predetermined rest period IP after the surface clock appears. Note that fifth to ninth pulses of the eleven electric power pulses r1 to r11 are omitted in FIG. 8 for simplicity. The eleventh pulse r11 disappears the rest period IP before the next surface clock signal appears.

After next one surface time, the same LEDs are supplied with eleven electric power pulses r1 to r11 again similarly, which is repeated till the contents are changed, producing the virtual display image by using the rotation control of the prism 2 , the light-on control of the LED array 1 and the afterimage effect.

In general, the virtual display image using the afterimage effect can be obtained without image-flickering by displaying the image at the rate of at least not less than 50Hz, preferably not less than 100Hz.

In this first embodiment, a display cycle is set to be 100Hz, and therefore a rotation clock signal interval (the one rotation cycle time) t1 becomes 0.04 second and a surface clock signal interval (the one surface time: TD/2 in the first embodiment) becomes 0.01 second. This means that the drive part 21 rotates the prism 2 at 0.04sec/rev., corresponding to 1500 r.p.m., a relatively low speed for current electric motors. Accordingly, a low cost motor can be employed and its control becomes easier in the first embodiment, thereby increasing its life.

The color of the image S is obtained as follows.

As shown in FIG. 8, in this first embodiment, one display period TD consists of one yellow display period YD and one blue display period BD, each of which corresponds to one surface clock signal interval. Each of the yellow display period YD and the blue display period BD consists of the two rest periods IP and one light-on control period DP between the rest periods IP, respectively. In the light-on control period DP, the eleven pulses r1 to r11 are supplied to some of the LEDs 1a to 1e according to the contents of the display information.

In the yellow display period YD, the first, the second and fifth LEDs 1a, 1b and 1e are supplied with the eleven pulses r1 to r1 at the same time in its light-on control period DP to each emit the white light. These white lights pass through the yellow filters Y1 and Y2 on the first and third surfaces 2a and 2c of the prism 2 to be changed into three yellow deflection rays.

These three yellow rays appear eleven times at first and second columns (two left columns in FIG. 7A) and a fifth column (a right column in FIG. 7A) of the display image S in the yellow display period YD.

In the next blue display period BD, the third, fourth and fifth LEDs I c, I d and 1e are supplied with the eleven pulses r1 to r11 at the same time and also at the same timing of the yellow display period YD in a light-on control period TD to each emit the white light. These white lights pass through the blue filters B1 and B2 on the second and fourth surfaces 2b and 2d of the prism 2 to be changed into three blue deflection rays. These three blue rays appear eleven times at third and forth columns and the fifth column of the display image S as shown in FIG. 7A in the blue display period YD.

In the result, the display image S is produced by five-column and eleven-line dot images, which are arranged in the first and second columns in yellow, the third and fourth columns in blue, and the fifth column in white. Note that the fifth column dot images S1e become white, because the driver see the yellow dot images in the yellow display period YD and then the blue dot images in the blue display period BD at the fifth column before the afterimage of the yellow dot images disappear. Accordingly the driver mixes up the yellow and blue dot images, which are produced at the same positions because of their light-on timing, into the white dot images due to the afterimage effect, since they are complementary colors. Incidentally, the white dot images are aligned on the line with the yellow and blue dot images, because the fifth LED 1e is controlled to emit its white light simultaneously with the light-on of the other LEDs.

The five LEDs 1a to 1e are used in the first embodiment, but the number of the LEDs may be changed according to need for contents of display information by varying a horizontal length of the display image. For example, twenty four LEDs may be used as shown in FIG. 7B, which represents a virtual display image S' of letters "ABC". In addition, the LEDs may be supplied with more or less electric power pulses to change the number of lines of the virtual display image.

The display device of the first embodiment has the following advantages.

The display device of the first embodiment can produce the two-dimensional display image without a screen, so that it can decrease light energy loss to obtain a sufficiently display brightness. This enables the display device to have a smaller and lower-cost light source, and its dimension, manufacturing and running cost can be reduced.

The display device does not need a high-cost multangular-prism mirror, and the prism 2 can be formed by injection molding of transparent resin, enabling it to decrease its manufacturing cost.

The display device can produce the virtual display image in different colors at lower manufacturing cost by using the color filters Y1, Y2, B1 and B2 in different colors on the paired surfaces 2a and 2c, and 2b and 2d of the prism 2 under its rotation control and the LEDs 1a to 1e in the same colors under the light-on control. This can provide the virtual display image in excellent visibility and representable in copious contents of display information.

The color filters change the color of the light emitted from the LEDs 1a to 1e by selecting the color filters, which enables the virtual display image to be produced in different colors even when using the same type LEDs emitting the same color light. This reduces its manufacturing cost.

Using the two different-color filters in complementary colors, such as yellow and blue, the display device can provide the virtual display device in three colors, such as yellow, blue and white.

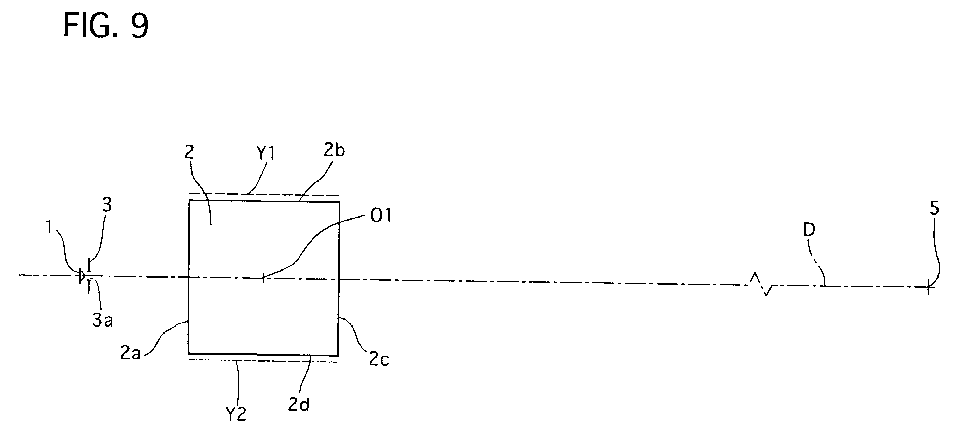

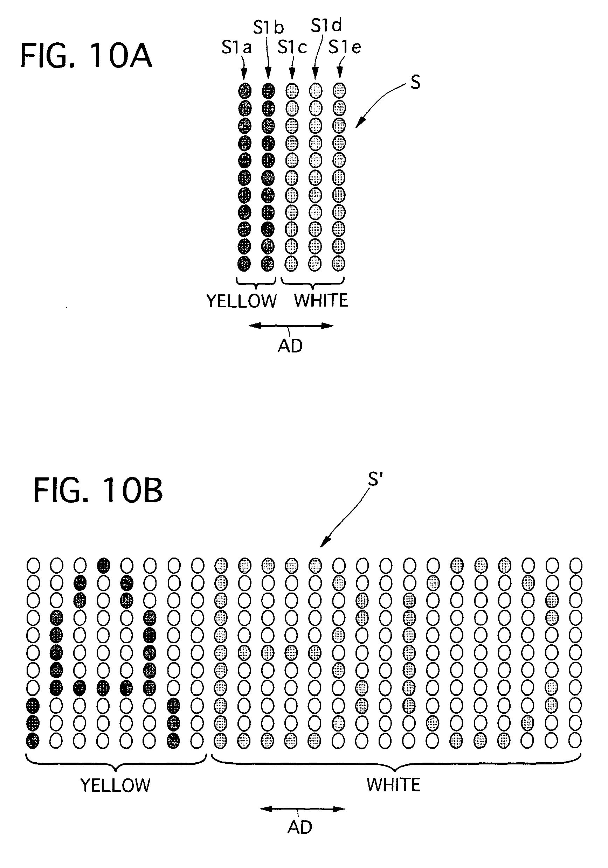

Next, a display device of a second embodiment according to the present invention will be described with reference of the accompanying drawings of FIGS. 9 and 10B.

As shown in FIG. 9, the display device of the second embodiment includes a prism 2 shaped in a quadrangular prism and made of transparent acrylic by injection molding. The prism 2 has a first surface 2a, a second surface 2b perpendicular to the first surface 2a, a third surface 2c perpendicular to the second surface 2b and parallel with the first surface 2a, and a fourth surface 2d perpendicular to the first and third surfaces 2a and 2c and parallel with the second surface 2b. The first and third surfaces 2a and 2c, and the second and fourth surfaces 2b and 2d constitute first paired surfaces and second paired surfaces of the present invention, respectively.

Yellow filters Y1 and Y2are putted on the second and fourth surfaces 2b and 2d, respectively, but no color filter is putted on the first and third surfaces 2a and 2c in the second embodiment.

The other parts of the display device of the second embodiment are similar to those of the first embodiment.

In this second embodiment, the display device can produce virtual display image S consisting of two-column yellow dot images S1a and S1b and three-column white dot images S1c to S1e as shown in FIG 10A. The two-column yellow dot images S1a and S1b are produced by emitting white light from first and second LEDs of an LED array 1 to pass through the second and fourth surfaces 2b and 2c of the prism 2with the yellow filters Y1 and Y2. The third- to fifth-column white dot images S1c to S1e are produced by emitting the white light from third to fifth LEDs to pass the first and fourth surfaces 2a and 2c of the prism 2 with no color filters. The LEDs are controlled to emit the white light eleven times during one surface clock signal interval.

FIG. 10B shows a two-dimensional virtual display image S' consisting of eight-column and eleven-line yellow dot images and sixteen-column and eleven-line white dot images and representing letters "ABC" ("A" in yellow and "BC" in white) by using twenty four LEDs instead of five LEDs.

White display image can provide good visibility at night and/or in a case where its background is black.

In this second embodiment, LEDs emit the white light, but they may emit light in other color, providing the virtual display image in the same color as the light of LEDs by passing the light through the surfaces of the prism 2 without color filters.

The display device of the second embodiment has the following advantages in addition to those of the first embodiment. The display device can provide a brighter display image, because the light energy is not attenuated by the color filter when the light passes through the surfaces of the prism 2 without the color filters.

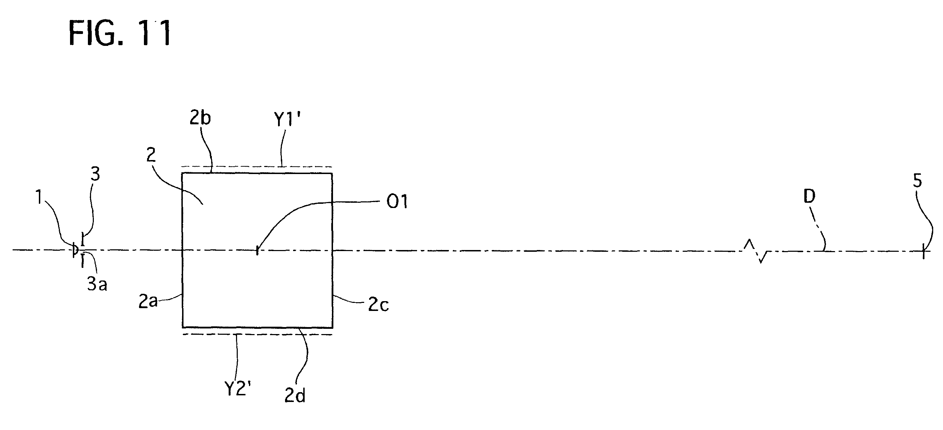

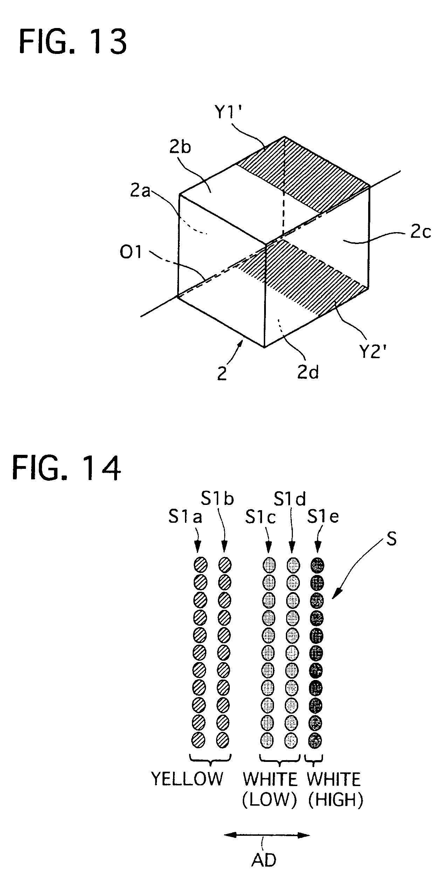

Next, a display device of a third embodiment according to the present invention will be described with reference of the accompanying drawings of FIGS. 11 and 14.

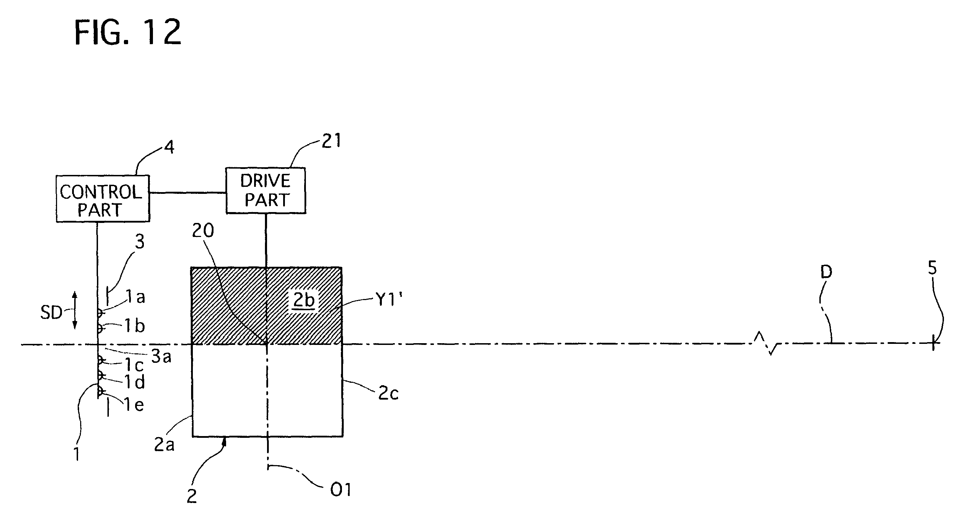

Referring to FIGS. 11 and 12, there is shown the display device of the third embodiment. The display device includes a prism 2 shaped in a quadrangular prism and made of transparent acrylic by injection molding. The prism 2 has a first surface 2a, a second surface 2b perpendicular to the first surface 2a, a third surface 2c perpendicular to the second surface 2b and parallel with the first surface 2a, and a fourth surface 2d perpendicular to the first and third surfaces 2a and 2c and parallel with the second surface 2b. The first and third surfaces 2a and 2c, and the second and fourth surfaces 2b and 2d act as paired surfaces of the present invention, respectively. One of them corresponds to first paired surfaces in first color of the present invention, and the other of them corresponds to second paired surfaces in second color of the present invention.

As shown in FIGS. 12 and 13, yellow filters Y1' and Y2' are putted on half portions of the second and fourth surfaces 2b and 2d of the prism 2, respectively, and no color filter is putted on the first and third surfaces 2a and 2c. A first LED 1a and a second LED 1b are arranged at one side of an optical axis D and a third LED 1c, a fourth LED 1d and a fifth LED 1e are arranged at the other side of the optical axis D so that white lights emitted from only the first and second LEDs 1a and 1b can pass through the yellow filters Y1' and Y2'. A space between the second LED 1b and the third LED 1c is set to be larger than those between the first and second LEDs 1a and 1b, between the third and fourth LEDs 1c and 1d, and between the fourth and fifth LEDs 1d and 1e so that a driver can recognize color difference of a virtual display image more clearly.

The other parts of the display device of the second embodiment are similar to those of the first embodiment.

In this third embodiment, the display device can provide the virtual display image consisting of yellow dot images S1a and S1b and white dot images S1c to S1e similarly to that of the first embodiment as shown in FIG. 14. In addition, the three- and fourth- column white dot images S1c and S1d can be displayed at a low level and the fifth-column white dot images S1e can be displayed at a high level. The three- and fourth- column white dot images S1c and S1d at the low level are obtained by emitting the white light from the third and fourth LEDs 1c and 1d to pass through only the first and third surfaces 2a and 2c of the prism 2 with no filter. The fifth-column white dot images S1e at the high level are obtained by individually emitting the white light from the third and fourth LEDs 1 c and 1 d to pass through the first and third surfaces 2a and 2c of the prism 2 with no filter and to pass through no-filter portions of the second and fourth surfaces 2b and 2d of the prism 2, adding them to each other. Therefore, a brightness level of the fifth-column white dot images S1e becomes higher than those of the yellow dot images S1a and S1b and the white dot images S1c and S1d.

The display device of the third embodiment has the following advantages in addition to those of the first and second embodiments. The display device can provide the virtual display images at different brightness levels without changing electric power level for the LEDs and using different types of the LEDs.

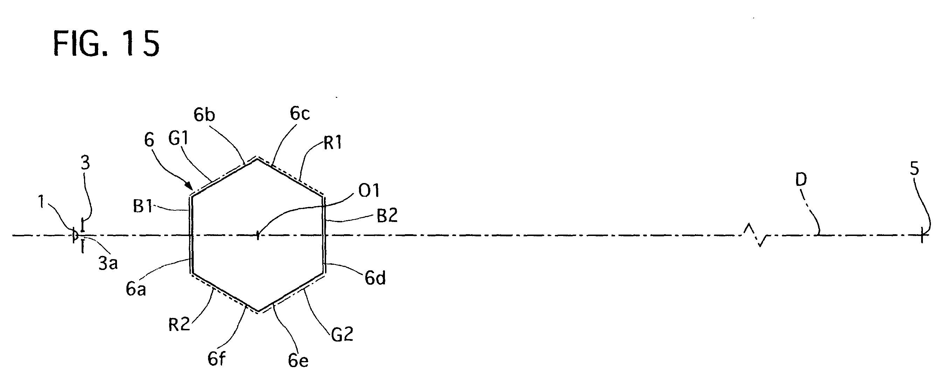

Next, a display device of a fourth embodiment according to the present invention will be described with reference of the accompanying drawing of FIGS. 15 to 18.

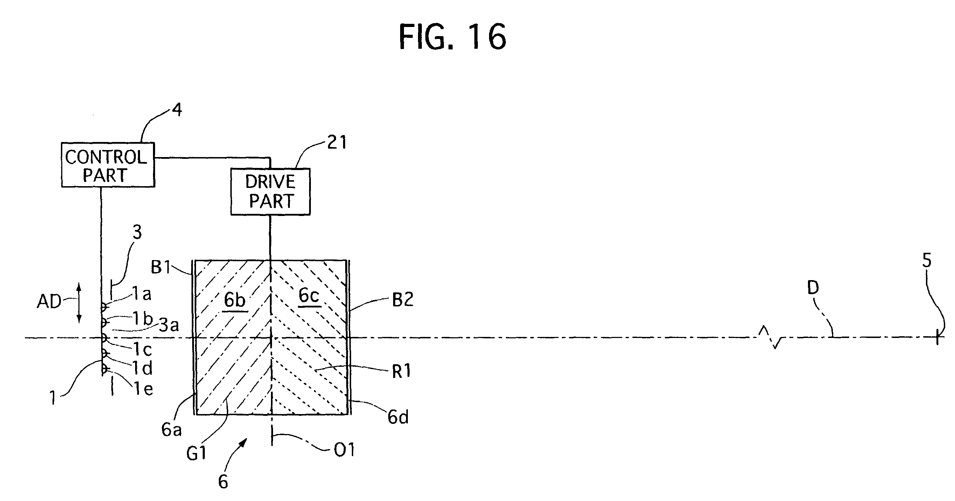

Referring to FIGS. 15 and 16, there is shown the display device of the fourth embodiment, which includes an LED array 1 for emitting white light and a prism 6 rotatable for deflecting the white light outputted from the LED array 1.

The prism 6 is shaped in a hexangular prism and made of transparent acrylic by injection molding to act as an optical system of the present invention. The prism 6 has a first surface 6a, a second surface 6b, a third surface 6c, a fourth surface 6d, a fifth surface 6e and a sixth surface 6f as shown in FIG. 15.

The first surface 6a and the fourth surface 6d are parallel with each other, and blue filters B1 and B2 adhere to them, respectively. The second surface 6b and the fifth surface 6e are parallel with each other, and green filters G1 and G2 adhere to them, respectively. The third surface 6c and the sixth surface 6f are parallel with each other, and red filters R1 and R2 adhere to them, respectively.

The first surface 6a and the fourth surface 6d, the second surface 6b and the fifth surface 6e, and the third surface 6c and the sixth surface 6f act as paired surfaces of the present invention. Therefore, the prism of the fourth embodiment has three sets of the paired surfaces. One of them corresponds to first paired surfaces in first color of the present invention, another of them corresponds to second surfaces in second color of the present invention, and the other of them corresponds to third surfaces in third color of the present invention. Note that the first to third colors are light's primary colors, specifically blue, green and red.

The other parts of the fourth embodiment are similar to those of the first embodiment except light-on control.

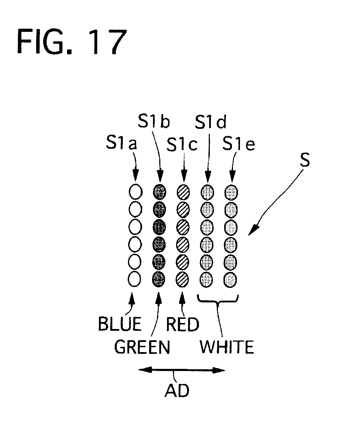

The prism 6 and first to fifth LEDs 1a to 1e of the LED array 1 are controlled so as to produce a virtual display image S shown in FIG. 17 under rotation control of the prism 2 and light-on control of the LEDs 1a to 1e performed by a control part 4.

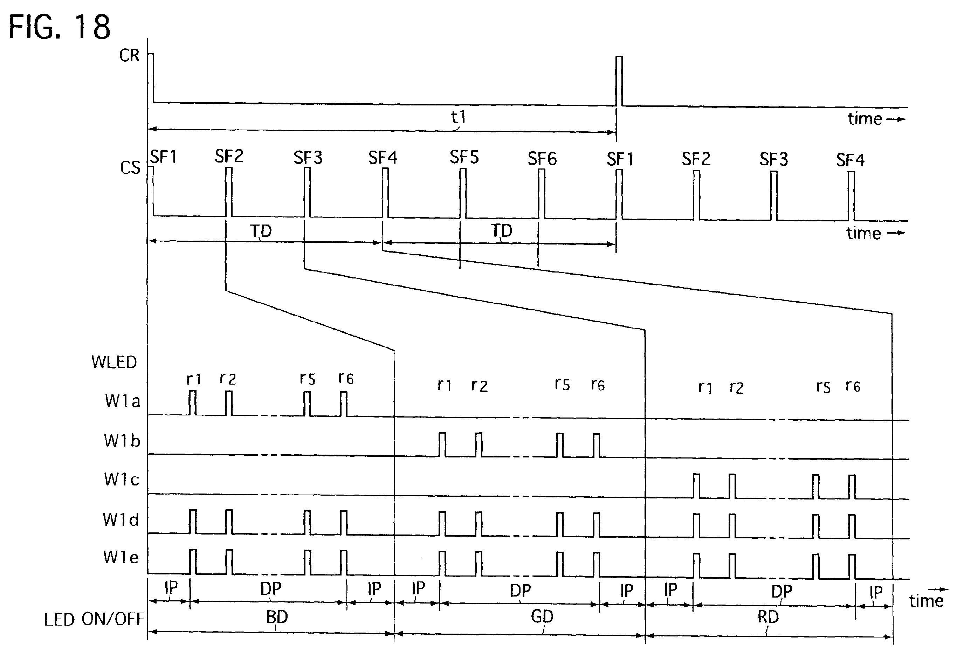

FIG. 18 shows a time chart of the rotation control and the light-on control.

In this embodiment, six surface clock signals SF1 to SF6 appears in one rotation of the prism 2

As shown in FIG. 18, one rotation clock signal interval t1 consists of two display periods TD, and the one display period TD consists of one blue display period BD, one green display period GD and one red display period RD.

Each blue, green and red display period BD, GD and RD corresponds to one surface clock signal interval (TD/3 or t1/6 in the fourth embodiment) and has two rest periods IP and one light-on control period DP between the rest periods IP. In the light-on control period DP, the control part 4 supplies first to sixth electric power pulses r1 to r6 to some of the LEDs 1a to 1e.

In the blue display period BD, the first LED 1a, the fourth LED 1d and the fifth LED 1e are supplied with the six pulses r1 to r6 to emit white light to pass through the first surface 6a of the prism 6 with the blue filter B1 and the fourth surface 6d of the prism 6 with the blue filter B2, being changed into blue rays.

In the next green display period GD, the second LED 1b, the fourth LED I d and the fifth LED 1e are supplied with the six pulses r1 to r6 to emit the white light to pass through the second surface 6b of the prism 6 with the green filter G1 and the fifth surface 6e of the prism 6 with the green filter G2, being changed into green rays.

In the following red display period RD, the third LED 1c, the fourth LED 1d and the fifth LED 1e are supplied with the six pulses r1 to r6 to emit the white light to pass through the third surface 6c of the prism 6 with the red filter R1 and the sixth surface 6f of the prism 6 with the red filter B2, being changed into red rays.

Therefore, these blue, green and red rays produce the virtual display image S consisting of five-column and six-line dot images S1a to S1e. The first-column dot images S1a is blue, the second-column dot images S1b is green, the third column dot images S1c is red, and the fourth- and fifth-column dot images S1d and S1e are white. This white color is produced by mixing up the blue, green and red rays, which are light's three primary colors, at the same positions by using the afterimage effect.

The display device of the fourth embodiment has the following advantages in addition to those of the first and second embodiments. The display device can provide a full-color virtual display image, thereby improving its display quality.

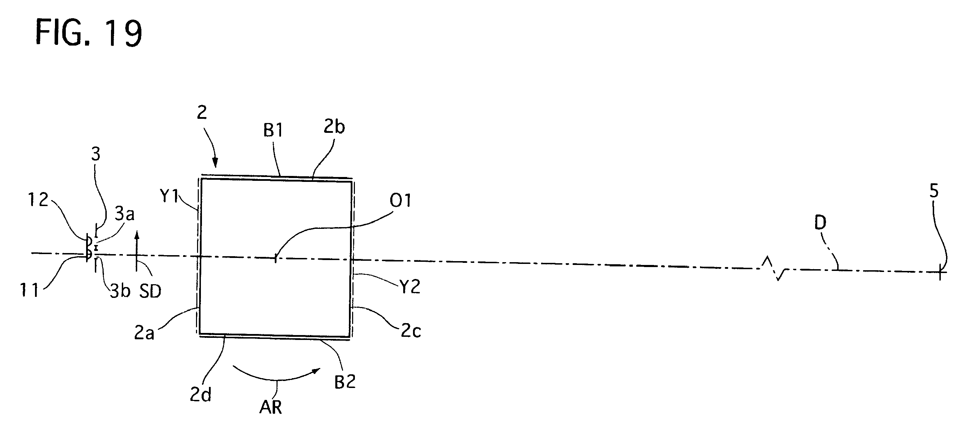

A display device of a fifth embodiment will be described with reference to the accompanying drawings of FIGS. 19 to 23.

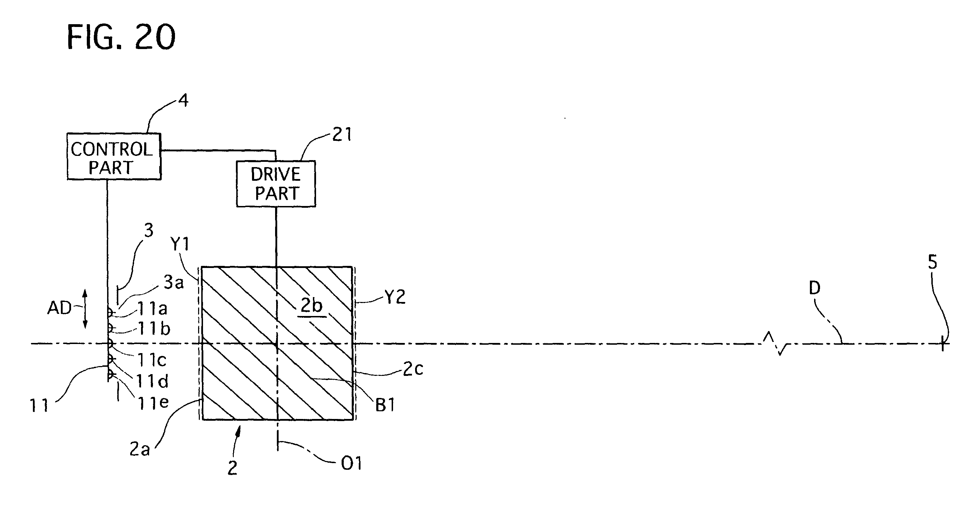

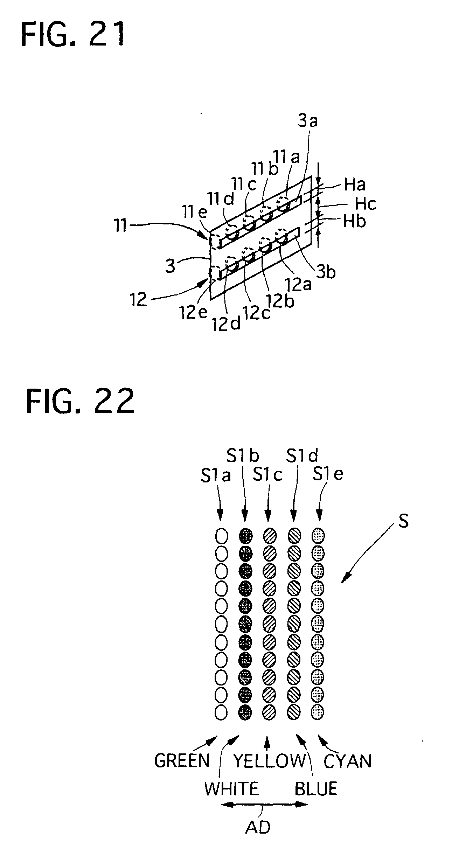

Referring to FIGS. 19 and 20, there is shown the display device of the fifth embodiment. The display device is provided with an LED array 11 having an upper LED array 11 and a lower LED array 12, which are spaced by a height Hc from each other as shown in FIG. 21. The upper LED array 11 consists of a first upper LED 11a, a second upper LED 11 b, a third upper LED 11c, a fourth upper LED 11d, a fifth upper LED 11e, and the lower LED array 12 consists of a first lower LED 12a, a second lower LED 12b, a third lower LED 12c, a fourth lower LED 12d, and a fifth lower LED 12e.

The first to fifth upper LEDs 11a to 11e are aligned in line with one another in a horizontal direction to emit green light, and under them, the first to fifth lower LEDs 12a to 12e are aligned in line with one another in the horizontal direction to emit white light.

A slit plate 3 is disposed between the LED arrays 11 and 12 and a prism 2 and is formed with an upper slit 3a and a lower slit 3b parallel with the upper slit 3a. The first slit 3a allows the green light emitted from the first to fifth upper LEDs 11a to 11e to pass therethrough, and the second slit 3b allows the white light emitted from the first to fifth lower LEDs 12a to 12e to pass therethrough.

The other parts of the fifth embodiment are similar to those of the first embodiment except light-on control of the LEDs 11a to 11e and 12a to 12e.

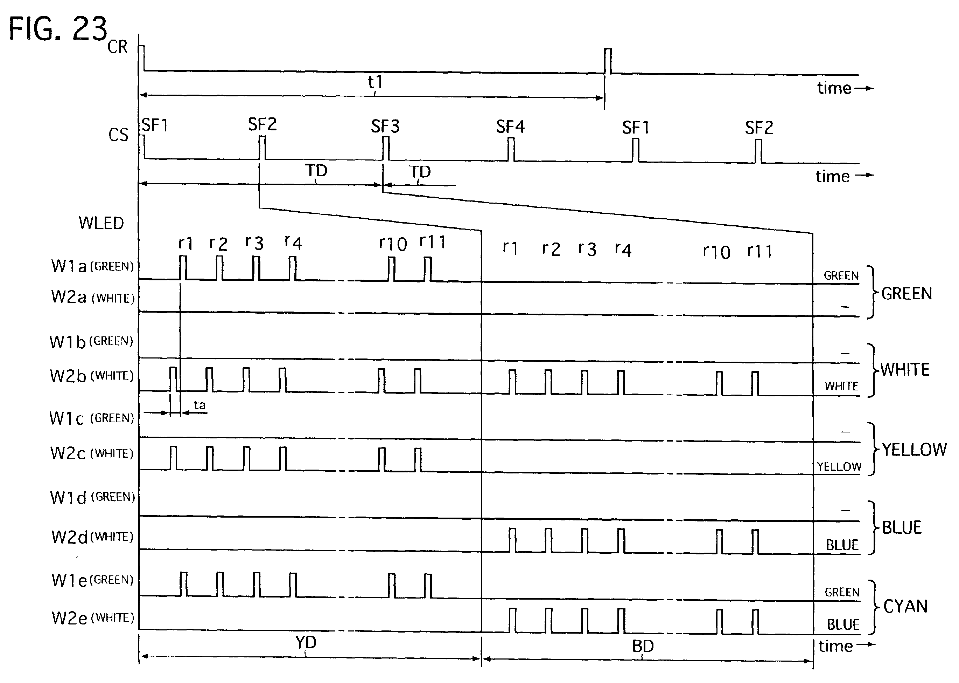

FIG. 23 shows a time chart of rotation control of the prism 2 and the light-on control of the LEDs 11 a to 11e and 12a to 12e.

In this time chart, waveforms of green lights emitted from the first to fifth upper LEDs 11a to 11e are indicated by W1a to W1e, respectively. Waveforms of white light emitted from the first to fifth lower LEDs 12a to 12e are indicated by W2a to W2e, respectively.

One display period TD consists of one yellow display period YD and one blue display period BD.

Light-on timings of the upper and lower LED arrays 11 and 12 are controlled in connection with each other so that the upper LED array 11 starts to emit the green light a delay time ta after the lower LED array 12 stats to emit the white light. This can a virtual display image produced by the upper LED array 11 and a virtual display image produced by the lower LED array 12 at the same positions not so as to be dislocated from each other due to the height Hc between the upper and lower LED arrays 11 and 12. Therefore, the display time ta is set based on the height Hc and rotation speed of the prism 2.

Incidentally, a horizontal length of the virtual display image can be adjusted by changing opening widths Ha and Hb of the slit plate 3.

Each yellow and blue display period YD and BD corresponds to one surface clock signal interval (TD/2 in the fifth embodiment) and has two rest periods and one light-on control period between the rest periods similarly to that of the first embodiment. In the light-on control period, a control part 4 supplies first to eleventh electric power pulses r1 to r1 to some of the LEDs 11a to 11e and 12a to 12e.

In the yellow display period YD, the second lower LED 12b and the third lower LED 12c are supplied with the six pulses r1 to r11 to emit the white light. The delay time ta after the first pulses r1 for the second and third lower LEDs 12b and 12c appear, the first pulses r1 for the first and fifth upper LEDs 11a and 11e start to appear, and the six pulses r1 to r11 are supplied to them to emit the green light.

In the next blue display period BD, the second, fourth and fifth lower LEDs 12b, 12d and 12e are supplied with the six pulses r1 to r11 to emit the white light. The first to fifth LEDs 11a to 11e are at rest.

Therefore, green virtual display dot images S1a, shown in FIG. 22, are obtained by using the green light from the first upper LED 11 a and the yellow filters Y1 and Y2 on a first surface 2a and a third surface 2c of prism. White virtual display dot images S1b are obtained by using the white light emitted from the second lower LED 12b and yellow and blue filters Y1, Y2, B1 and B2 on first to fourth surfaces 2a to 2d of the prism 2. Yellow virtual display dot images S1c are obtained by using the white light emitted from the third lower LED 12c and the yellow filters Y1 and Y2. Blue virtual display dot images S1d are obtained by using the white light emitted from the fourth lower Led 12d and the blue filters B1 and B2. Cyan virtual display dot images S1e are obtained by using the green light emitted from the fifth upper LED 11e and the yellow filters Y1 and Y2, and also by using the white light emitted from the fifth lower LED 12e and the blue filters B1 and B2. Note that these images S I a to S1e are produced by using the afterimage effect.

The display device of the fifth embodiment has the following advantages in addition to those of the first and second embodiments.

In the display device of the fifth embodiment, the lights in different colors (green and white in the fifth embodiment) are emitted from the upper and lower LED arrays 11 and 12 can provide the virtual display image in colors produced from a combination of the light-colors and the color filters, improving display quality of the display device.

While there have been particularly shown and described with reference to preferred embodiments thereof, it will be understood that various modifications may be made therein, and it is intended to cover in the appended claims all such modifications as fall within the scope of the invention.

For example, the optical system may have other configuration instead of the quadrangular prism and the hexangular prism used in the embodiments.

The color filter may be constructed to have color different from those in the embodiment, and the light emitting elements may be constructed to emit light different from those of the embodiments.

## Claims

1. Display device for producing a virtual display image (S) based on contents of display information, the display device comprising:
a plurality of light emitting elements (1, 1a to 1e; 11, 11a to 11e, 12, 12a to 12e) which are arranged in line and capable of emitting light;
an optical system (2; 6) made of transparent material so that the optical system (2; 6) allows the light outputted from the light emitting elements (1, 1a to 1e; 11, 11a to 11e, 12, 12a to 12e) to enter and exit the optical system (2; 6);
a rotating unit (21) for rotating the optical system (2; 6); and
a control unit (4) for controlling lighting-on and light-off of the light emitting elements (1, 1a to 1e; 11, 11a to 11e, 12, 12a to 12e) in synchronization with rotation movement of the optical system (2; 6) and according to the contents of the image information to be displayed;
**characterized in that**
the optical system (2;6) is provided with a color filter (Y1, Y2, Y1', Y2', B1, B2; B1, B2, G1, G2, R1, R2) which is put on a surface (2a, 2b, 2c, 2d; 6a, 6b, 6c, 6d, 6e, 6f) of the optical system (2; 6) and selectively passes the light in a predetermined wavelength band through the color filter (Y1, Y2, Y1', Y2', B1, B2; B1, B2, G1, G2, R1, R2).

2. Display device according to claim 1, **characterized in that**
the optical system (2; 6) has at least two sets of paired surfaces (2a and 2c, 2b and 2d; 6a and 6d, 6b and 6e, 6c and 6f) opposite to each other, and
wherein
the color filter (Y1, Y2, B1, B2; B1, B2, G1, G2, R1, R2) comprises a first color filter (Y1, Y2; B1, B2; G1, G2; R1, R2) in first color and a second color filter (Y1, Y2; B1, B2; G1, G2; R1, R2) in second color, and the first and second colors are different from each other.

3. Display device according claim 1 or claim 2, **characterized in that**
the light emitted from the light emitting elements (1, 1a to 1e; 11, 11a to 11e, 12, 12a to 12e) has a wavelength band for at least two colors where the color filter (Y1, Y2; B1, B2; Y1', Y2'; G1, G2; R1, R2) selectively passes the light therethrough.

4. Display device according to any one of claims 1 to 3, **characterized**
**in that**
the optical system (2) has paired surfaces (2a and 2c, 2b and 2d), and wherein
the color filter (Y1, Y2, B1, B2) comprises a first color filter (Y1, Y2; B1, B2) in first color and a second color filter (B1, B2; Y1, Y2) in second color, and the first and second colors are light's complementary colors.

5. Display device according to any one of claims 1 to 4, **characterized**
**in that**
the optical system (2; 6) has at least one set of paired surfaces (2a and 2c, 2b and 2d; 6a and 6d, 6b and 6e, 6c and 6f) without the color filter.

6. Display device according to any one of claims 1 to 5, further
**characterized in that**
the optical system (2) has paired surfaces (2a and 2c, 2b and 2d, and wherein
the color filter (Y1', Y2') is putted on a part of the paired surface (2a and 2c, 2b and 2d) of the optical system (2).

7. Display device according to any one of claims 1, 2, 3, 5 and 6,
**characterized in that**
the optical system (6) has at least three sets of paired surfaces (6a and 6d, 6b and 6e, 6c and 6f), and the color filter (B1, B2, G1, G2, R1, R2) comprises a first color filter (B1, B2; G1, G2; R1; R2) in first color, a second color filter (B1, B2; G1, G2; R1; R2) in second color, and a third color filter (B1, B2; G1, G2; R1; R2) in third color, the first to third colors being light's three primary colors.

8. Display device according to any one of claims 1 to 7, **characterized**
**in that**
the light emitting elements (11,11 a to 11e, 12, 12a to 12e) comprises first light emitting elements and second light emitting elements (11, 11a to 11e; 12, 12a to 12e) arranged in parallel with the first light emitting elements (12, 12a to 12e ; 11, 11 a to 11e), the first and second light emitting elements (11, 11a to 11e, 12, 12a to 12e) emitting lights in different colors, respectively.

9. Display device according to any one of claims 1 to 8, **characterized**
**in that**
the light emitting elements (1, 1a to 1e; 11, 11a to 11e, 12, 12a to 12e) are supplied with a plurality of electric power pulses (r1 to r11) to emit the light to produce the virtual display image(S) by using afterimage effect.

10. Display device according to any one of claims 1 to 9, **characterized**
**in that**
the optical system (2; 6) has at least two sets of paired surfaces (2a and 2c, 2b and 2d; 6a and 6d, 6b and 6e, 6c and 6f), and wherein
the virtual image (S) is provided by using mixing-up of a first virtual display images and a second virtual images due to after-image effect, the first and second virtual images being obtained by using different sets of the paired surfaces (2a and 2c, 2b and 2d; 6a and 6d, 6b and 6e, 6c and 6f).

## Patentansprüche

1. Anzeigevorrichtung zur Erzeugung eines virtuellen Anzeigebilds (S) auf der Basis von Anzeigeinformationen, wobei die Anzeigevorrichtung umfaßt:
eine Mehrzahl von Lichtemissionselementen (1, 1 a bis 1 e; 11, 11a bis 11 e, 12, 12a bis 12e), die in Linie angeordnet sind und Licht emittieren können;
ein optisches System (2; 6) aus lichtdurchlässigem Material, so daß das optische System (2; 6) es dem von den Lichtemissionselementen (1, 1 a bis 1 e; 11, 11a bis 11 e, 12, 12a bis 12e) ausgegebenen Licht erlaubt, in das optische System (2; 6) einzutreten und aus diesem auszutreten;
eine Dreheinheit (21) zum Drehen des optischen Systems (2; 6); und
eine Steuereinheit (4) zum Steuern des Einschaltens und Ausschaltens des Lichts der Lichtemissionselemente (1, 1 a bis 1 e; 11, 11a bis 11e, 12, 12a bis 12e) synchron mit der Drehbewegung des optischen Systems (2; 6) und gemäß dem Inhalt der anzuzeigenden Bildinformationen;
**dadurch gekennzeichnet, daß**
das optische System (2; 6) mit einem Farbfilter (Y1, Y2, Y1', Y2', B1, B2; B1, B2, G1, G2, R1, R2) versehen ist, der auf eine Fläche (2a, 2b, 2c, 2d; 6a, 6b, 6c, 6d, 6e, 6f) des optischen Systems (2; 6) aufgesetzt ist und das Licht wahlweise in einem vorgegebenen Wellenlängenband durch den Farbfilter (Y1, Y2, Y1', Y2', B1, B2, B1, B2, G1, G2, R1, R2) hindurchläßt.

2. Anzeigevorrichtung nach Anspruch 1, **dadurch gekennzeichnet, daß**
das optische System (2; 6) mindestens zwei Gruppen einander gegenüberliegender, gepaarter Flächen (2a und 2c, 2b und 2d; 6a und 6d, 6b und 6e, 6c und 6f) aufweist, und wobei
der Farbfilter (Y1, Y2, B1, B2; B1, B2, G1, G2, R1, R2) einen ersten Farbfilter (Y1, Y2; B1, B2; G1, G2; R1, R2) in einer ersten Farbe und einen zweiten Farbfilter (Y1, Y2; B1, B2; G1, G2; R1, R2) in einer zweiten Farbe umfaßt und sich die erste und die zweite Farbe voneinander unterscheiden.

3. Anzeigevorrichtung nach Anspruch 1 oder Anspruch 2, **dadurch**
**gekennzeichnet, daß**
das von den Lichtemissionselementen (1, 1 a bis 1 e; 11, 11 a bis 11 e, 12, 12a bis 12e) ausgesandte Licht ein Wellenlängenband für mindestens zwei Farben aufweist, wobei der Farbfilter (Y1, Y2; B1, 82; Y1', Y2'; G1, G2; R1, R2) das Licht wahlweise durch diese hindurchläßt.

4. Anzeigevorrichtung nach einem der Ansprüche 1 bis 3, **dadurch gekennzeichnet, daß**
das optische System (2) gepaarte Flächen (2a und 2c, 2b und 2d) aufweist, und wobei
der Farbfilter (Y1, Y2, B1, B2) einen ersten Farbfilter (Y1, Y2; B1, B2) in einer ersten Farbe und einen zweiten Farbfilter (B1, B2; Y1, Y2) in einer zweiten Farbe umfaßt und die erste und die zweite Farbe Komplementärfarben des Lichts sind.

5. Anzeigevorrichtung nach einem der Ansprüche 1 bis 4, **dadurch gekennzeichnet, daß**
das optische System (2; 6) mindestens eine Gruppe gepaarter Flächen (2a und 2c, 2b und 2d; 6a und 6d, 6b und 6e, 6c und 6f) ohne den Farbfilter aufweist.

6. Anzeigevorrichtung nach einem der Ansprüche 1 bis 5, außerdem **dadurch gekennzeichnet, daß**
das optische System (2) gepaarte Flächen (2a und 2c, 2b und 2d) aufweist, und wobei
der Farbfilter (Y1', Y2') auf einen Teil der gepaarten Fläche (2a und 2c, 2b und 2d) des optischen Systems (2; 6) aufgesetzt ist.

7. Anzeigevorrichtung nach einem der Ansprüche 1, 2, 3, 5 und 6, **dadurch gekennzeichnet, daß**
das optische System (6) mindestens drei Gruppen gepaarter Flächen (6a und 6d, 6b und 6e, 6c und 6f) aufweist und der Farbfilter (B1, B2, G1, G2, R1, R2) einen ersten Farbfilter (B1, B2; G1, G2; R1; R2) in einer ersten Farbe, einen zweiten Farbfilter (B1, B2; G1, G2; R1, R2) in einer zweiten Farbe und einen dritten Farbfilter (B1, B2; G1, G2; R1; R2) in einer dritten Farbe umfaßt, wobei die erste bis zur dritten Farbe Grundfarben des Lichts sind.

8. Anzeigevorrichtung nach einem der Ansprüche 1 bis 7, **dadurch gekennzeichnet, daß**
die Lichtemissionselemente (11, 11a bis 11e, 12, 12a bis 12e) erste Lichtemissionselemente und zweite, parallel zu den ersten Lichtemissionselementen (12, 12a bis 12e; 11, 11 a bis 11 e) angeordnete Lichtemissionselemente (11, 11 a bis 11 e; 12, 12a bis 12e) umfassen, wobei die ersten und die zweiten Lichtemissionselemente (11, 11 a bis 11 e; 12, 12a bis 12e) jeweils Licht in verschiedenen Farben emittieren.

9. Anzeigevorrichtung nach einem der Ansprüche 1 bis 8, **dadurch**
**gekennzeichnet, daß**
die Lichtemissionselemente (1, 1 a bis 1 e, 11, 11a bis 11 e, 12, 12a bis 12e) mit einer Mehrzahl elektrischer Leistungsimpulse (r1 bis r11) zur Emission des Lichts versorgt werden, um das virtuelle Anzeigebild (S) durch Nutzung des Nachbildeffekts zu erzeugen.

10. Anzeigevorrichtung nach einem der Ansprüche 1 bis 9, **dadurch gekennzeichnet, daß**
das optische System (2; 6) mindestens zwei Gruppen gepaarter Flächen (2a und 2c, 2b und 2d; 6a und 6d, 6b und 6e, 6c und 6f) aufweist, und wobei
das virtuelle Bild (S) durch Mischen eines ersten virtuellen Bilds und eines zweiten virtuellen Bilds auf Grund des Nachbildeffekts bereitgestellt wird, wobei man das erste und das zweite virtuelle Bild durch Verwendung verschiedener Gruppen der gepaarter Flächen (2a und 2c, 2b und 2d; 6a und 6d, 6b und 6e, 6c und 6f) erhält.

## Revendications

1. Dispositif d'affichage destiné à produire une image d'affichage virtuelle (S) en fonction d'un contenu d'informations d'affichage, le dispositif d'affichage comprenant :
une pluralité d'éléments électroluminescents (1, la à le ; 11, 11a à 11e, 12, 12a à 12e) qui sont agencés en ligne et capables d'émettre de la lumière ;
un système optique (2 ; 6) composé d'un matériau transparent de sorte que le système optique (2 ; 6) permet à la lumière émise depuis les éléments électroluminescents (1, 1a à le ; 11, 11a à 11e, 12, 12a à 12e) d'entrer et de sortir du système optique (2 ; 6) ;
une unité rotative (21) destiné à tourner le système optique (2 ; 6) ; et
une unité de commande (4) destiné à commander l'allumage et l'extinction des éléments électroluminescents (1, 1a à le ; 11,11a à 11e, 12, 12a à 12e) en synchronisation avec le mouvement de rotation du système optique (2 ; 6) et selon le contenu des informations d'image à afficher ;
**caractérisé en ce que**
le système optique (2 ; 6) est pourvu d'un filtre de couleur (Y1, Y2, Y1', Y2', B1, B2, B1, B2, G1, G2, R1, R2) qui est posé sur une surface (2a, 2b, 2c, 2d ; 6a, 6b, 6c, 6d, 6e, 6f) du système optique (2 ; 6) et transmet, de façon sélective, la lumière dans une bande de longueur prédéterminée à travers le filtre de couleur (Y1, Y2, Y1', Y2', B1, B2, B1, B2, G1, G2, R1, R2).

2. Dispositif d'affichage selon la revendication 1,
**caractérisé en ce que**
le système optique (2 ; 6) comprend au moins deux ensembles de surfaces appariées (2a et 2c, 2b et 2d ; 6a et 6d, 6b et 6e, 6c et 6f) opposés l'un par rapport à l'autre, et dans lequel
le filtre de couleur (Y1, Y2, B1, B2 ; B1, B2, G1, G2, R1, R2) comprend un premier filtre de couleur (Y1, Y2 ; B1, B2 ; G1, G2 ; R1, R2) dans une première couleur et un deuxième filtre de couleur (Y1, Y2, B1, B2 ; G1, G2 ; R1, R2) dans une deuxième couleur, et les première et deuxième couleurs sont différentes l'une de l'autre.

3. Dispositif d'affichage selon la revendication 1 ou la revendication 2, **caractérisé en ce que**
la lumière émise depuis les éléments électroluminescents (1, la à 1e ; 11, 11a à 11e, 12, 12a à 12e) présente une bande de longueur d'onde pour au moins deux couleurs où le filtre de couleur (Y1, Y2 ; B1, B2 ; Y1', Y2' ; G1, G2 ; R1, R2) transmet de façon sélective à travers celle-ci.

4. Dispositif d'affichage selon l'une quelconque des revendications 1 à 3, **caractérisé en ce que**
le système optique (2) comprend des surfaces appariées (2a et 2c, 2b et 2d), et dans lequel
le filtre de couleur (Y1, Y2, B1, B2) comprend un premier filtre de couleur (Y1, Y2 ; B1, B2) dans une première couleur (B1, B2 ; Y1, Y2) dans une deuxième couleur, et les première et deuxième couleurs sont des couleurs complémentaires de la lumière.

5. Dispositif d'affichage selon l'une quelconque des revendications 1 à 4, **caractérisé en ce que**
le système optique (2 ; 6) comprend au moins un ensemble de surfaces appariées (2a et 2c, 2b et 2d ; 6a et 6d, 6b et 6e, 6c et 6f) sans le filtre de couleur.

6. Dispositif d'affichage selon l'une quelconque des revendications 1 à 5, **caractérisé en outre en ce que**
le système optique (2) comprend des surfaces appariées (2a et 2c, 2b et 2d) et dans lequel
le filtre de couleur (Y1', Y2') est posé sur une partie de la surface appariée (2a et 2c, 2b et 2d) du système optique (2).

7. Dispositif d'affichage selon l'une quelconque des revendications 1, 2, 3, 5 et 6, **caractérisé en ce que**
le système optique (6) comprend au moins trois ensembles de surfaces appariées (6a et 6d, 6b et 6e, 6c et 6f), et le filtre de couleur (B1, B2, G1, G2, R1, R2) comprend un premier filtre de couleur (B1, B2 ; G1, G2 ; R1 ; R2) dans une première couleur, un deuxième filtre de couleur (B1, B2 ; G1, G2 ; R1, R2) dans une deuxième couleur, et un troisième filtre de couleur (B1, B2 ; G1, G2 ; R1, R2) dans une troisième couleur, les première à troisième couleurs étant trois couleurs primaires de la lumière.

8. Dispositif d'affichage selon l'une quelconque des revendications 1 à 7, **caractérisé en ce que**
les éléments électroluminescents (11, 11a à 11e, 12, 12a à 12e) comprend des premiers éléments électroluminescents et des deuxièmes éléments électroluminescents (11, 11a à 11e, 12, 12a à 12e) agencés parallèlement avec les premiers éléments électroluminescents (12, 12a à 12e ; 11, 11a à 11e), les premiers et deuxièmes éléments électroluminescents (11, 11a à 11e, 12, 12a à 12e) émettant des lumières de différentes couleurs, respectivement.

9. Dispositif d'affichage selon l'une quelconque des revendications 1 à 8, **caractérisé en ce que**
les éléments électroluminescents (1, 1a à 1e ; 11, 11a à 11e, 12, 12a à 12e) sont alimentées avec une pluralité d'impulsions d'énergie électrique (r1 à r11) pour émettre la lumière pour produire l'image d'affichage virtuelle (S) en utilisant un effet d'image consécutive.

10. Dispositif d'affichage selon l'une quelconque des revendications 1 à 9, **caractérisé en ce que**
le système optique (2 ; 6) comprend au moins deux ensembles de surfaces appariées (2a et 2c, 2b et 2d ; 6a et 6d, 6b et 6e, 6c et 6f), et dans lequel
l'image virtuelle (S) est fournie en utilisant un mélange de premières images d'affichage virtuelles et de deuxièmes images virtuelles dû à un effet d'image consécutive, les premières et deuxièmes images virtuelles étant obtenues à l'aide de différents ensembles des surfaces appariées (2a et 2c, 2b et 2d ; 6a et 6d, 6b et 6e, 6c et 6f).
